(19) Europäisches Patentamt
European Patent Office
Office européen des brevets

(11) **EP 2 653 907 B1**

(12) **EUROPEAN PATENT SPECIFICATION**

(45) Date of publication and mention
of the grant of the patent:
**22.02.2017  Bulletin 2017/08**

(51) Int Cl.:
***G02B 5/26*** *(2006.01)*     ***G02B 27/01*** *(2006.01)*
***G02B 26/00*** *(2006.01)*     ***G02B 5/20*** *(2006.01)*

(21) Application number: **12196651.9**

(22) Date of filing: **12.12.2012**

(54) **Glasses-type display**

Brillenähnliche Anzeige

Affichage de type en verre

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.04.2012  KR 20120040417**

(43) Date of publication of application:
**23.10.2013  Bulletin 2013/43**

(73) Proprietor: **Samsung Electronics Co., Ltd.
Suwon-si, Gyeonggi-do, 443-742 (KR)**

(72) Inventors:
 • **Kim, Jung-woo
   449-712 Gyeonggi-do (KR)**
 • **Yun, Young-jun
   449-712 Gyeonggi-do (KR)**
 • **Jung, Myoung-hoon
   449-712 Gyeonggi-do (KR)**

(74) Representative: **Portch, Daniel
   Elkington and Fife LLP
   Prospect House
   8 Pembroke Road
   Sevenoaks, Kent TN13 1XR (GB)**

(56) References cited:
   **WO-A1-2011/051660     KR-A- 20110 123 228
   US-A1- 2006 110 090     US-A1- 2012 068 913
   US-B2- 7 848 001**

**Description**

FIELD OF THE INVENTION

At least one example embodiment relates to glasses-type (e.g., eye glasses) displays having simple structures and/or compact sizes.

BACKGROUND OF THE INVENTION

Glasses-type displays for simultaneously obtaining a real object and an image, for example, head-mounted displays (HMDs), have recently drawn attention. HMDs may be effectively used when two pieces of information need to be simultaneously obtained without changing a point of view in special applications such as military, vehicles, or aviation. Glasses-type displays are roughly classified into, for example, optical see-through displays and waveguide displays. However, due to large volumes and high costs, glasses-type displays are not widely used. A glasses-type display includes a reflection member that reflects an image signal sent from an imaging device to the glasses. A volume and a weight of the glasses-type display are increased due to parts such as the reflection member, thereby causing inconvenience to a user. Accordingly, it is necessary to reduce the number of parts and a size of the glasses-type display.
International Patent Application Publication Number WO 2011/051660 A1 presents a wearable display comprising at least one Switchable Bragg Grating layer device recorded in at least one Holographic Polymer Dispersed Liquid Crystal layer.
United States Patent Number US 7848,001 B2 discloses a method and system for interferometric modulation in projection or peripheral devices.
United States Patent Application Publication number US 2012 133672 A2 provides a method of changing color or transmittance of light on a surface part of an object.

SUMMARY OF THE INVENTION

At least one example embodiment provides glasses-type displays having simple structures and/or compact sizes.
Additional aspects will be set forth in part in the description which follows and, in part, will be apparent from the description, or may be learned by practice of example embodiments.
According to an aspect of the invention, there is provided a glasses-type display according to claim 1.
According to at least one example embodiment, a glasses-type display includes: a lens unit configured to selectively reflect light of different wavelength bands, and the lens unit including a plurality of photonic crystal pattern units, each of the plurality of photonic crystal pattern units including pixels; a leg unit coupled to the lens unit; and an image supply unit configured to supply an image to the lens unit.
According to at least one example embodiment, the pixels include layers having different refractive indices which are alternately stacked.
According to at least one example embodiment, each of pixels of the plurality of photonic crystal pattern units may include: a first electrode; a second electrode facing the first electrode; a medium disposed between the first electrode and the second electrode; and charged nanoparticles charged dispersed in the medium in a lattice pattern.
According to at least one example embodiment, the plurality of photonic crystal pattern units may include wiring lines connected to the first electrode and the second electrode of the pixels.
According to at least one example embodiment, the first electrode and the second electrode may be transparent electrodes.
According to at least one example embodiment, a voltage or current may be independently applied to each of the plurality of photonic crystal pattern units.
According to at least one example embodiment, a spectrum of light reflected from each of the plurality of photonic crystal pattern units may be controlled by a control signal applied to each of the plurality of photonic crystal pattern units.
According to at least one example embodiment, a wavelength of light reflected from each of the plurality of photonic crystal pattern units may vary.
According to at least one example embodiment, the plurality of photonic crystal pattern units may include: a first photonic crystal pattern unit including first pixels configured to reflect light of a first wavelength band; a second photonic crystal pattern unit including second pixels configured to reflect light of a second wavelength band; and a third photonic crystal pattern unit including third pixels configured to reflect light of a third wavelength band.
According to at least one example embodiment, the plurality of photonic crystal pattern units may be formed by any one of a lift-off method, a metal mask method, and a photolithography method.

According to at least one example embodiment, a transmittance of each of the pixels varies according to at least one of a shape of the nanoparticles, a volume of the nanoparticles, an interval between the nanoparticles, and a refractive index of the nanoparticles.

According to at least one example embodiment, the lens unit is configured to simultaneously display an image from the image supply unit and an external image.

According to at least one example embodiment, the image supply unit and the external image are on opposite sides of the lens unit.

According to at least one example embodiment, each of the pixels are configured to reflect the image from the image supply unit to a user's eyes and transmit the external image to the user's eyes.

According to at least one example embodiment, the plurality of pixels includes a first set of pixels, a second set of pixels, and a third set of pixels, and the first set of pixels reflects red light and transmits blue and green light, the second set of pixels reflects blue light and transmits red and green light, and the third set of pixels reflects green light and transmits blue and red light.

According to at least one example embodiment, each pixel in the first, second, and third pixel sets includes a plurality of layers having different refractive indices, and the layers having different refractive indices are alternately stacked.

According to at least one example embodiment, the glasses-type display further comprises: at least one voltage supply unit configured to apply a voltage to the plurality of photonic crystal pattern units and vary a transmittance of the plurality of pixels.

According to at least one example embodiment, the at least one voltage supply unit includes first, second, and third voltage supply units configured to selectively apply voltages to the plurality of photonic crystal pattern units according to a desired light transmittance of the pixels.

According to at least one example embodiment, the image supply unit is a projector configured to project the image to the lens unit.

Embodiments may enable a user to view both an image supplied from an image supply unit and a real object without a separate reflection member by providing photonic crystal pattern units on a lens unit. Such embodiments may have a simple structure and a compact size by patterning photonic crystals. User convenience may thus be improved.

BRIEF DESCRIPTION OF THE EMBODIMENTS

These and/or other aspects will become apparent and more readily appreciated from the following description of example embodiments, taken in conjunction with the accompanying drawings in which:

FIG. 1 is a perspective view illustrating a glasses-type display according to at least one example embodiment;
FIG. 2 is a view illustrating photonic crystal pattern units used in the glasses-type display of FIG. 1;
FIG. 3 is a view illustrating a glasses-type display according to at least one example embodiment;
FIG. 4 is a view illustrating photonic crystal pattern units used in the glasses-type display of FIG. 3;
FIG. 5 is a graph illustrating a variation of an optical spectrum of the photonic crystal pattern shown in FIG. 4; and
FIG. 6 is a graph illustrating a variation of an optical transmittance according to the wavelength of the photonic crystal pattern shown in FIG. 4.

DETAILED DESCRIPTION OF THE DRAWINGS

Example embodiments will be understood more readily by reference to the following detailed description and the accompanying drawings. The example embodiments may, however, be embodied in many different forms and should not be construed as being limited to those set forth herein. Rather, these example embodiments are provided so that this disclosure will be thorough and complete. Example embodiments should be defined by the appended claims. In at least some example embodiments, well-known device structures and well-known technologies will not be specifically described in order to avoid ambiguous interpretation.

It will be understood that when an element is referred to as being "connected to" or "coupled to" another element, it can be directly on, connected or coupled to the other element or intervening elements may be present. In contrast, when an element is referred to as being "directly connected to" or "directly coupled to" another element, there are no intervening elements present. Like numbers refer to like elements throughout. As used herein, the term "and/or" includes any and all combinations of one or more of the associated listed items.

It will be understood that, although the terms first, second, third, etc., may be used herein to describe various elements, components and/or sections, these elements, components and/or sections should not be limited by these terms. These terms are only used to distinguish one element, component or section from another element, component or section. Thus, a first element, component or section discussed below could be termed a second element, component or section without departing from the teachings of example embodiments.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises," "comprising," "includes," and/or "including" when used in this specification, specify the presence of stated components, steps, operations, and/or elements, but do not preclude the presence or addition of one or more other components, steps, operations, elements, and/or groups thereof.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Spatially relative terms, such as "below", "beneath", "lower", "above", "upper", and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

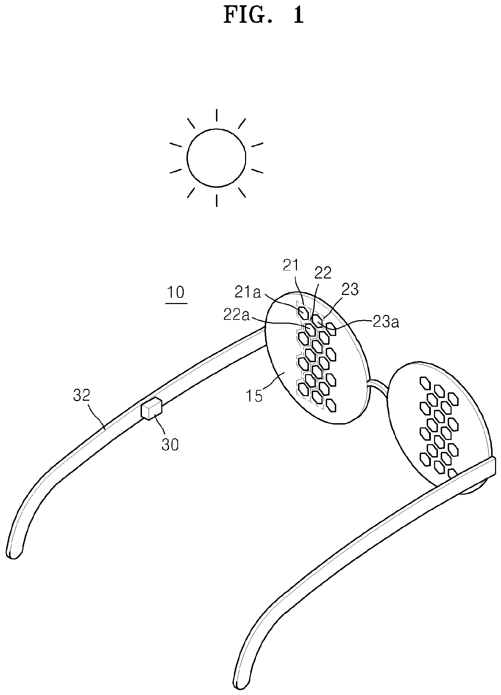

FIG. 1 is a perspective view illustrating a glasses-type display 10 according to at least one example embodiment. The glasses-type display 10 includes a lens unit 15 that includes a plurality of photonic crystal pattern units, and a glass leg unit 32 that is coupled to the lens unit 15. An image supply unit 30 for supplying an image may be provided on the glass leg unit 32. The image supply unit 30 may be, for example, a projector.

Photonic crystals constituting the photonic crystal pattern units are artificial crystals that include periodically arranged materials having different dielectric constants and have a photonic band gap (PBG) in an energy spectrum of electromagnetic waves. When light is incident on the photonic crystals, most wavelengths pass through the photonic crystals without being scattered. However, there occurs a reflection zone where some wavelengths (or frequencies) may not pass through the photonic crystals, which is called a PBG. When light having a wavelength (or a frequency) belonging to the PBG is incident on the photonic crystals, the light does not pass through the photonic crystals but is reflected from the photonic crystals. As such, the photonic crystals selectively transmit and reflect light. Since the photonic crystals are formed by periodically arranging dielectric materials, a size or a position of the PBG may vary according to a refractive index and a periodic structure.

The plurality of photonic crystal pattern units may include, for example, a first photonic crystal pattern unit 21, a second photonic crystal pattern unit 22, and a third photonic crystal pattern unit 23. Each of the plurality of photonic crystal pattern units has a wavelength selectivity to reflect light having a desired (or alternatively, predetermined) wavelength and transmit light having the other wavelengths, and is pixelated in the lens unit 15. That is, each of the plurality of photonic crystal pattern units may include a plurality of pixels, and the plurality of pixels may be patterned in various manners. For example, the pixels of each of the photonic crystal pattern units may be patterned to be aligned and/or grated.

The plurality of photonic crystal pattern units may be configured to reflect light having different wavelengths. For example, the first photonic crystal pattern unit 21 may include first pixels 21a that reflect light having a first wavelength, for example, a red wavelength, and transmit light having the other wavelengths (e.g., green and blue). The second photonic crystal pattern unit 22 may include second pixels 22a that reflect light having a second wavelength, for example, a green wavelength, and transmit light having the other wavelengths (e.g., blue and red). The third photonic crystal pattern unit 23 may include third pixels 23a that reflect light having a third wavelength, for example, a blue wavelength, and transmit light having the other wavelengths (e.g., red and green).

The plurality of photonic crystal pattern units may be, for example, alternately and repeatedly arranged. For example, the first pixels 21a of the first photonic crystal pattern unit 21, the second pixels 22a of the second photonic crystal pattern unit 22, and the third pixels 23a of the third photonic crystal pattern unit 23 may be sequentially aligned in a column line, respectively. Next, the first photonic crystal pattern unit 21, the second photonic crystal pattern unit 22, and the third photonic crystal pattern unit 23 may be periodically arranged in a row in the same manner as the above-described alignment.

Alternatively, a ratio of areas of the first through third photonic crystal pattern units 21 through 23 may vary according to desired color temperatures or desired colors. For example, one line of first photonic crystal pattern unit 21, two lines of second photonic crystal pattern units 22, and one line of third photonic crystal pattern unit 23 may be periodically arranged.

The plurality of photonic crystal pattern units may be formed by using any one of a lift-off method, a metal-mask method, and a photolithography method.

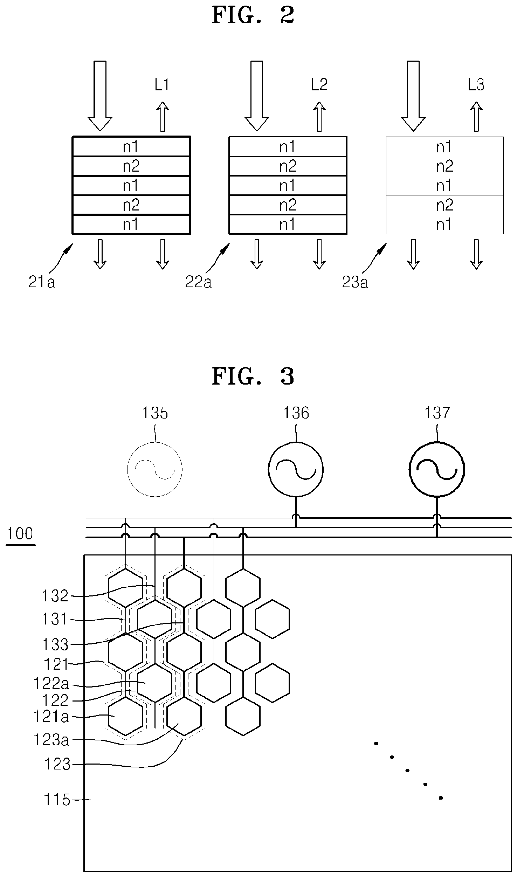

FIG. 2 illustrates the photonic crystal pattern units of FIG. 1. For example, each of the first pixel 21 a, the second pixel 22a, and the third pixel 23a in the photonic crystal pattern units may have a structure in which a plurality of layers having different refractive indices is alternately stacked. Each of the first pixel 21 a, the second pixel 22a, and the third pixels 23a may have a structure in which a first layer having a first refractive index n1 and a second layer having a second refractive index n2 are alternately stacked. Thicknesses of the layers may vary according to each of the pixels. Alternatively, materials of the layers may vary according to each of the pixels. In each pixel, a wavelength of light reflected from the pixel may be changed by adjusting a refractive index or a thickness of a layer. In FIG. 2, each of the first pixel 21 a, the second pixel 22a, and the third pixel 23a has a structure in which a layer having the first refractive index n1 and a layer having the second refractive index n2 are alternately stacked, and thickness of each layer is different from each other. The first pixel 21 a may reflect light L1 having a first wavelength and transmit light having the other wavelengths, the second pixel 22a may reflect light L2 having a second wavelength and transmit light having the other wavelengths, and the third pixel 23a may reflect light L3 having a third wavelength and transmit light having the other wavelengths. However, the pixels of the photonic crystal pattern units of FIG. 2 are exemplarily shown, and example embodiments are not limited thereto.

An operation of the glasses-type display 10, according to an example embodiment of FIG. 1 will be explained below.

When an image is supplied from the image supply unit 30 of the glasses-type display 10 to the lens unit 15, from among light constituting the image, light having a first wavelength is reflected from the first photonic crystal pattern unit 21 to user's eyes, light having a second wavelength is reflected from the second photonic crystal pattern unit 22 to the user's eyes, and light having a third wavelength is reflected from the third photonic crystal pattern unit 23 to the user's eyes. Accordingly, the user may view the image supplied from the image supply unit 30. At the same time, when external light such as sunlight or illumination light is irradiated to the glasses-type display 10, the light having the first wavelength is reflected from the first photonic crystal pattern unit 21, but the light having the second wavelength and the light having the third wavelengths is transmitted through the first photonic crystal pattern unit 21 to the user's eyes. The light having the second wavelength is reflected from the second photonic crystal pattern unit 22, but the light having the first wavelength and the light having the third wavelength is transmitted through the second photonic crystal pattern unit 22 to the user's eyes. Also, the light having the third wavelength is reflected from the third photonic crystal pattern unit 23, but the light having the first wavelength and the light having the second wavelength is transmitted through the third photonic crystal pattern unit 23 to the user's eyes. Accordingly, the user may also view an external real object through the glasses-type display 10.

As such, the user may simultaneously view both the image supplied from the image supply unit 30 and the real object by using the glasses-type display 10. A reflectance of the image supplied from the image supply unit 30 and a transmittance of the external light may be appropriately adjusted according to materials of pixels constituting the photonic crystal pattern units and/or a ratio of areas of the first through third photonic crystal pattern units 21, 22, and 23.

FIG. 3 is a view illustrating a glasses-type display 100 according to at least one example embodiment. In FIG. 3, one part of a lens unit 115 of the glasses-type display 100 is shown. Referring to FIG. 3, the glasses-type display 100 includes a plurality of photonic crystal pattern units for reflecting light having different wavelengths. Each of the plurality of photonic crystal pattern units may include a plurality of pixels, and the plurality of pixels may be patterned. The plurality of photonic crystal pattern units may include, for example, a first photonic crystal pattern unit 121 that reflects light having a first wavelength and transmits light having the other wavelengths, a second photonic crystal pattern unit 122 that reflects light having a second wavelength and transmits light having the other wavelengths, and a third photonic crystal pattern unit 123 that reflects light having a third wavelength and transmits light having the other wavelengths. The first photonic crystal pattern unit 121 may include first pixels 121 a, the second photonic crystal pattern unit 122 may include second pixels 122a, and the third photonic crystal pattern unit 123 may include third pixels 123a. The glasses-type display 100 of FIG. 3 may include wiring lines for connecting pixels to change a wavelength of light reflected from each of the photonic crystal pattern units. Also, the glasses-type display 100 may include a power supply source for supplying a voltage or current to each of the photonic crystal pattern units.

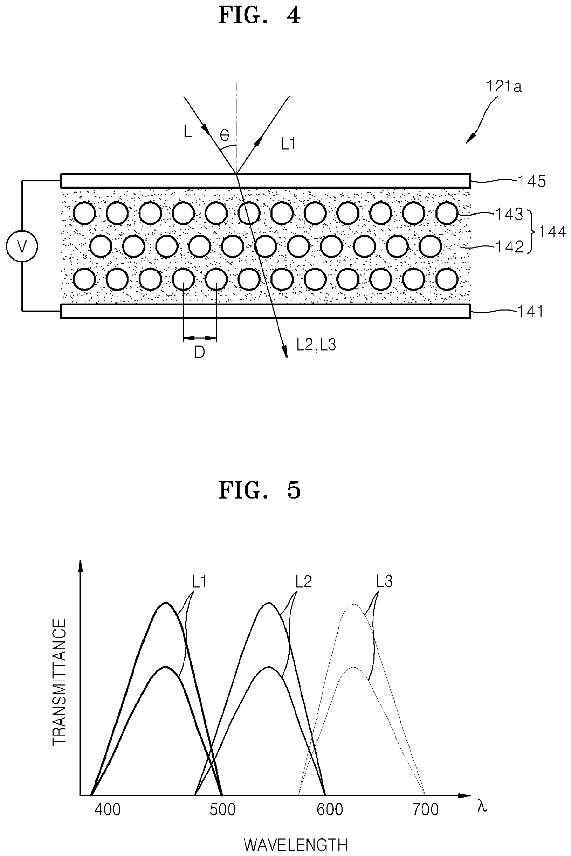

For example, first wiring lines 131 may be connected between the first pixels 121 a of the first photonic crystal pattern unit 121, second wiring lines 132 may be connected between the second pixels 122a of the second photonic crystal pattern unit 122, and third wiring lines 133 may be connected between the third pixels 123a of the third photonic crystal pattern unit 123. Each of the first wiring line 131, the second wiring line 132, and the third wiring line 133 may include a wiring line connected to a first electrode 141 (from FIG. 4) and a wiring line connected to a second electrode 145 (from FIG. 4). Meanwhile, the glasses-type display 100 may include a first power supply source 135 for supplying a voltage or current to the first photonic crystal pattern unit 121, a second power supply source 136 for supplying a voltage or current to the second photonic crystal pattern unit 122, and a third power supply source 137 for supplying a voltage or current to the third photonic crystal pattern unit 123.

FIG. 4 is a view illustrating the photonic crystal pattern units which may change a wavelength of light reflected therefrom. Although only the first pixels 121 a are shown in FIG. 4, the second and third pixels 122a and 123a may be applied in the same manner as that of the first pixels 121 a.

The first pixels 121 a include the first electrode 141, and the second electrode 145 that faces the first electrode 141. The first pixels 121 a may include a photonic crystal layer 144 that is disposed between the first electrode 141 and the second electrode 145. The photonic crystal layer 144 may include a medium 142 and nanoparticles 143 that are dispersed in the medium 142. The nanoparticles 143 may be charged, and may be dispersed in a lattice pattern. The first electrode 141 and the second electrode 145 may be transparent electrodes.

The nanoparticles 143 of the photonic crystal layer 144 are evenly dispersed due to electrokinetic phenomena. A photonic band gap (PBG) of the photonic crystal layer 144 may be changed by changing any one of a shape of photonic crystals, a volume of the photonic crystals, an interval between the photonic crystals, and a refractive index of the photonic crystals. As the PBG is changed, a wavelength bandwidth of light reflected from the photonic crystal layer 144 may be adjusted. Accordingly, the photonic crystal layer 144 may modulate a color of light reflected from the photonic crystal layer 144. For example, when light L is incident on the photonic crystal layer 144, light L1 including a first wavelength band may be reflected from the photonic crystal layer 144 whereas light L2 and L3 including the other wavelength bands may be transmitted through the photonic crystal layer 144.

Since the nanoparticles 143 of the photonic crystal layer 144 are charged, when a voltage V is applied between the first electrode 141 and the second electrode 145, the nanoparticles 143 shift according to the voltage V. An interval between the nanoparticles 143 may be changed, and a PBG may be changed due to the change in the interval between the nanoparticles 143. The PBG of the photonic crystal layer 144 which includes a reflected wavelength band is dependent on at least one of a size of the nanoparticles 143 and an interval between the nanoparticles 143. Accordingly, a size of the nanoparticles 143 may be appropriately determined according to a wavelength band of light to be reflected. For example, the nanoparticles 143 may have a size of about tens of nm to about hundreds of nm. For example, in order to reflect a color of a visible light band, the nanoparticles 143 may have a size of about hundreds of nm, for example, about 300 nm.

Next, an operation of the photonic crystal layer 144 according to at least one example embodiment will be explained.

The nanoparticles 143 may be charged positively or negatively, and may be dispersed in the medium 142 to be spaced apart from one another due to an electrostatic repulsive force. When a voltage V is applied between the first and second electrodes 141 and 145, an electric field E is formed in the medium 142. The nanoparticles 143 including an electric double layer are moved in one direction toward the first electrode 141 or the second electrode 142 in the medium 142, and thus are evenly dispersed in equilibrium with the electrostatic repulsive force and arranged at desired (or alternatively, predetermined) intervals D in a lattice pattern.

The lattice structure of the nanoparticles 143 of the photonic crystal layer 144 has a PBG for reflecting or transmitting light having a specific wavelength due to periodic refractive indices. According to Bragg's law, light having a desired (or alternatively, predetermined) wavelength λ defined by Equation 1 does not pass through the photonic crystal layer 144 but is reflected from the photonic crystal layer 144.

$$m\lambda = 2nD \cdot \sin\theta \qquad \ldots (1)$$

In equation 1, λ denotes a wavelength of light diffracted or reflected from the photonic crystal layer 144, $n$ denotes an effective refractive index of the photonic crystal layer 144, D denotes an interval between the nanoparticles 143 of the photonic crystal layer 144, θ denotes an angle at which the light is incident, and $m$ denotes an integer.

When a size of the voltage V applied between the first and second electrodes 141 and 145 is changed, a balanced state with the electrostatic repulsive force is changed and thus the interval D between the nanoparticles 143 is changed. Accordingly, the wavelength λ of the light L1 reflected from the photonic crystal layer 144 may be adjusted by adjusting the voltage V applied between the first and second electrodes 141 and 145. For example, as the voltage V increases, a wavelength band of the light L1 reflected from (or transmitted through) the photonic crystal layer 144 may decrease. FIG. 5 is a graph illustrating a variation of an optical spectrum of the photonic crystal pattern shown in FIG. 4, which illustrates a variation of a transmittance with respect to a same wavelength. As shown by FIG. 4, a wavelength spectrum may be controlled.

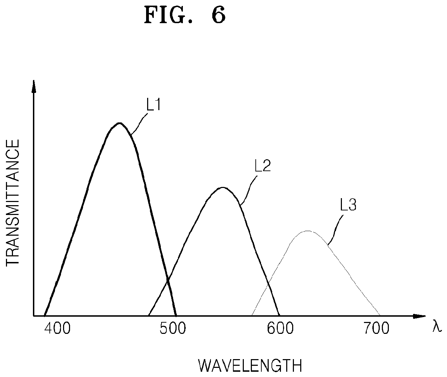

Meanwhile, a reflectance or a transmittance may be adjusted according to materials of the nanoparticles 143 or the medium 142. FIG. 6 is a graph illustrating a variation of an optical transmittance according to the wavelength of the photonic crystal pattern shown in FIG. 4, which illustrates a relationship between a wavelength and a transmittance. It is found that the transmittance may vary according to the wavelength. For example, the transmittance may be adjusted by controlling positions of the nanoparticles 143, by irradiating light, and then by controlling a size of the nanoparticles 143.

As other examples of variable photonic crystals, the photonic crystals may be encapsulated in a polymer matrix such that an interval between the nanoparticles 143 disposed in a lattice pattern is adjusted due to physical compression/stretching, or encapsulated in a polymer matrix such that the nanoparticles 143 are expanded or contracted due to temperature, moisture, chemical stimulation, or biological stimulation.

According to at least one example embodiment, each photonic crystal pattern unit may control a wavelength of light reflected therefrom or a reflectance (or a transmittance) of light. Accordingly, a wavelength of reflected light may be changed to accommodate a surrounding environment. Also, a wavelength of reflected light or a reflectance may be adjusted according to user's preference. For example, a user who has a color deficiency may use the glasses-type display 100 more conveniently by increasing the amount of light having a wavelength with a color the user has difficulty distinguishing.

As described above, a glasses-type display according to the one or more example embodiments may enable a user to view both an image supplied from an image supply unit and a real object without a separate reflection member by providing photonic crystal pattern units on a lens unit. The glasses-type display may have a simple structure and a compact size by patterning photonic crystals. Accordingly, since the glasses-type display is small and simplified, user convenience may be improved. The glasses-type display may be applied to various industrial fields, for example, a head-mounted display (HMD).

While the example embodiments have been particularly shown and described with reference to exemplary embodiments thereof, it will be understood by those of ordinary skill in the art that various changes in form and details may be made.

## Claims

1. A glasses-type display (10) comprising:

    a lens unit (15) including a plurality of photonic crystal pattern units (21,22,23), each of the plurality of photonic crystal pattern units configured to selectively reflect light of different wavelength bands from an image supply unit (30), each of the plurality of photonic crystal pattern units comprising a plurality of pixels which are patterned based on the different wavelengths;
    a leg unit (32) coupled to the lens unit; and
    the image supply unit (30) configured to supply an image to the lens unit,
    **characterized in that** the plurality of photonic crystal pattern units comprise:

       a first photonic crystal pattern unit including first pixels configured to reflect light of a first wavelength band;
       a second photonic crystal pattern unit including second pixels configured to reflect light of a second wavelength band; and
       a third photonic crystal pattern unit including third pixels configured to reflect light of a third wavelength band, wherein each of the first to third pixels of the plurality of photonic crystal pattern units comprises:

          a first electrode;
          a second electrode facing the first electrode;
          the first and second electrode being each an electrode common to all pixels of a photonic crystal pattern unit;
          a medium between the first electrode and the second electrode; and
          charged nanoparticles dispersed in the medium in a lattice pattern,
          and wherein the glasses-type display is configured to simultaneously display an image from the image supply unit and an external image.

2. The glasses-type display of claim 1, wherein the plurality of photonic crystal pattern units comprise wiring lines connected to the first electrode and the second electrode of the pixels.

3. The glasses-type display of any preceding claim, wherein the first electrode and the second electrode are transparent electrodes.

4. The glasses-type display of any preceding claim, wherein a voltage is independently applied to each of the plurality of photonic crystal pattern units.

5. The glasses-type display of any preceding claims, wherein a spectrum of light reflected from each of the plurality of photonic crystal pattern units is controlled by a control signal applied to each of the plurality of photonic crystal pattern units.

6. The glasses-type display of claim 4, wherein a wavelength of light reflected from each of the plurality of photonic crystal pattern units is adapted to vary by adjusting the voltage applied to each of the plurality of photonic crystal units.

7. The glasses-type display of any preceding claim, wherein a transmittance of each of the pixels varies according to at least one of a shape of the nanoparticles, a volume of the nanoparticles, an interval between the nanoparticles, and a refractive index of the nanoparticles.

8. The glasses-type display of any preceding claim, wherein
the first pixels reflects red light and transmits blue and green light,
the second pixels reflects blue light and transmits red and green light, and
the third pixels reflects green light and transmits blue and red light.

**Patentansprüche**

1. Brillenartige Anzeige (10), umfassend:

eine Linseneinheit (15) einschließlich einer Mehrzahl von photonischen Kristallmustereinheiten (21, 22, 23), wobei jede der Mehrzahl von photonischen Kristallmustereinheiten dafür konfiguriert ist, Licht verschiedener Wellenlängenbereiche aus einer Bildliefereinheit (30) selektiv zu reflektieren,
wobei jede der Mehrzahl von photonischen Kristallmustereinheiten eine Mehrzahl von Pixeln umfasst, die auf Basis der verschiedenen Wellenlängen gemustert sind;
eine Bügeleinheit (32), die mit der Linseneinheit verbunden ist; und
die Bildliefereinheit (30), die dafür konfiguriert ist, ein Bild an die Linseneinheit zu liefern, **dadurch gekennzeichnet, dass** die Mehrzahl von photonischen Kristallmustereinheiten Folgendes umfasst:

eine erste photonische Kristallmustereinheit einschließlich erster Pixel, die dafür konfiguriert ist, Licht eines ersten Wellenlängenbereichs zu reflektieren;
eine zweite photonische Kristallmustereinheit einschließlich zweiter Pixel, die dafür konfiguriert ist, Licht eines zweiten Wellenlängenbereichs zu reflektieren; und
eine dritte photonische Kristallmustereinheit einschließlich dritter Pixel, die dafür konfiguriert ist, Licht eines dritten Wellenlängenbereichs zu reflektieren,
wobei jedes der ersten bis dritten Pixel der Mehrzahl von photonischen Kristallmustereinheiten Folgendes umfasst:

eine erste Elektrode;
eine zweite Elektrode, die der ersten Elektrode zugewandt ist;
wobei die erste und zweite Elektrode beide eine allen Pixeln einer photonischen Kristallmustereinheit gemeinsame Elektrode sind;
ein Medium zwischen der ersten Elektrode und der zweiten Elektrode; und
geladene Nanopartikel, die im Medium in einem Gittermuster dispergiert sind,
und wobei die brillenartige Anzeige dafür konfiguriert ist, gleichzeitig ein Bild aus der Bildliefereinheit und ein externes Bild anzuzeigen.

2. Brillenartige Anzeige nach Anspruch 1, wobei die Mehrzahl von photonischen Kristallmustereinheiten Verdrahtungsleitungen umfasst, die mit der ersten Elektrode und der zweiten Elektrode der Pixel verbunden sind.

3. Brillenartige Anzeige nach irgendeinem vorhergehenden Anspruch, wobei die erste Elektrode und die zweite Elektrode transparente Elektroden sind.

4. Brillenartige Anzeige nach irgendeinem vorhergehenden Anspruch, wobei eine Spannung unabhängig an jede der Mehrzahl von photonischen Kristallmustereinheiten angelegt wird.

5. Brillenartige Anzeige nach irgendwelchen vorhergehenden Ansprüchen, wobei ein von jeder der Mehrzahl von photonischen Kristallmustereinheiten reflektiertes Lichtspektrum durch ein an jede der Mehrzahl von photonischen Kristallmustereinheiten angelegtes Steuersignal gesteuert wird.

6. Brillenartige Anzeige nach Anspruch 4, wobei eine Wellenlänge von Licht, das von jeder der Mehrzahl von photonischen Kristallmustereinheiten reflektiert wird, dafür ausgelegt ist, durch Einstellen der an jede der Mehrzahl von photonischen Kristalleinheiten angelegten Spannung zu variieren.

**7.** Brillenartige Anzeige nach irgendeinem vorhergehenden Anspruch, wobei ein Durchlassgrad jedes der Pixel je nach mindestens einem einer Form der Nanopartikel, einem Volumen der Nanopartikel, einem Intervall zwischen den Nanopartikeln und einem Brechungsindex der Nanopartikel variiert.

**8.** Brillenartige Anzeige nach irgendeinem vorhergehenden Anspruch, wobei
die ersten Pixel rotes Licht reflektieren und blaues und grünes Licht durchlassen,
die zweiten Pixel blaues Licht reflektieren und rotes und grünes Licht durchlassen, und
die dritten Pixel grünes Licht reflektieren und blaues und rotes Licht durchlassen.

**Revendications**

**1.** Dispositif d'affichage du type à lunettes (10), comprenant :

une monture à verres (15) composée d'une pluralité d'unités en forme de cristaux photoniques (21,22,23), chacune de la pluralité d'unités en forme de cristaux photoniques étant configurée pour refléter sélectivement la lumière de différentes bandes de longueurs d'ondes à partir d'un dispositif de fourniture d'image (30), chacune de la pluralité d'unités en forme de cristaux photoniques comprenant une pluralité de pixels dont la forme est basée sur les différentes longueurs d'onde ;
une branche (32) accouplée à la monture à verres ; et
le dispositif de fourniture d'image (30) configuré pour fournir une image à la monture à verres,
**caractérisé en ce que** la pluralité d'unités en forme de cristaux photoniques comprend :

une première unité en forme de cristaux photoniques comprenant des premiers pixels configurés pour refléter la lumière d'une première bande de longueurs d'ondes ;
une deuxième unité en forme de cristaux photoniques comprenant des deuxièmes pixels configurés pour refléter la lumière d'une deuxième bande de longueurs d'ondes ; et
une troisième unité en forme de cristaux photoniques comprenant des troisième pixels configurés pour refléter la lumière d'une troisième bande de longueurs d'ondes,
chacun des premiers aux troisièmes pixels de la pluralité d'unités en forme de cristaux photoniques comprenant :

une première électrode ;
une deuxième électrode située face à la première électrode ;
les première et deuxième électrodes étant chacune une électrode commune à tous les pixels d'une unité en forme de cristaux photoniques ;
un milieu placé entre la première électrode et la deuxième électrode ;
et des nanoparticules dispersées dans le milieu dans une configuration à réseau,
et le dispositif d'affichage en forme de lunettes étant configuré pour afficher simultanément une image provenant du dispositif de fourniture d'image et une image externe.

**2.** Dispositif d'affichage du type à lunettes selon la revendication 1, la pluralité d'unités en forme de cristaux photoniques comprenant des lignes de câblage connectées à la première électrode et la deuxième électrode des pixels.

**3.** Dispositif d'affichage du type à lunettes selon une quelconque des revendications précédentes, la première électrode et la deuxième électrode étant des électrodes transparentes.

**4.** Dispositif d'affichage du type à lunettes selon une quelconque des revendications précédentes, une tension étant appliquée simultanément sur chacune des unités en forme de cristaux photoniques.

**5.** Dispositif d'affichage du type à lunettes selon une quelconque des revendications précédentes, un spectre de lumière étant reflété de chacune de la pluralité d'unités en forme de cristaux photoniques étant commandé par un signal de commande appliqué à chacune de la pluralité d'unités en forme de cristaux photoniques.

**6.** Dispositif d'affichage du type à lunettes selon la revendication 4, une longueur d'onde de lumière reflétée de chacune de la pluralité d'unités en forme de cristaux photoniques étant adaptée pour varier la tension appliquée sur chacune de la pluralité d'unités en forme de cristaux photoniques.

7.  Dispositif d'affichage du type à lunettes selon une quelconque des revendications précédentes, une transmittance de chacun des pixels variant en fonction d'au moins un des suivants : une forme des nanoparticules, un volume des nanoparticules, un intervalle entre les nanoparticules, et un indice de réfraction des nanoparticules.

8.  Dispositif d'affichage du type à lunettes selon une quelconque des revendications précédentes, dans lequel les premiers pixels reflètent une lumière rouge et transmettent une lumière bleue et verte, les deuxième pixels reflètent une lumière bleue et transmettent une lumière rouge et verte ; et les troisième pixels reflètent une lumière verte et transmettent une lumière bleue et rouge.

# FIG. 1

# FIG. 2

# FIG. 3

# FIG. 4

# FIG. 5

FIG. 6

**EP 2 653 907 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011051660 A1
- US 7848001 B2
- US 2012133672 A2